(19) Europäisches Patentamt
European Patent Office
Office européen des brevets

(11) **EP 4 769 011 A1**

(12) **EUROPEAN PATENT APPLICATION**
published in accordance with Art. 153(4) EPC

(43) Date of publication:
**01.07.2026 Bulletin 2026/27**

(21) Application number: **24856435.3**

(22) Date of filing: **20.08.2024**

(51) International Patent Classification (IPC):
**G02C 7/04** $^{(2006.01)}$

(52) Cooperative Patent Classification (CPC):
**G02C 7/04**

(86) International application number:
**PCT/JP2024/029382**

(87) International publication number:
**WO 2025/041747 (27.02.2025 Gazette 2025/09)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.08.2023 JP 2023133880**

(71) Applicant: **Seed Co., Ltd.**
**Tokyo 113-8402 (JP)**

(72) Inventors:
• **IBAYASHI, Yota**
**Tokyo 113-8402 (JP)**
• **KAMEI, Sayaka**
**Tokyo 113-8402 (JP)**

(74) Representative: **Schulz Junghans**
**Patentanwälte PartGmbB**
**Großbeerenstraße 71**
**10963 Berlin (DE)**

(54) **METHOD FOR MANUFACTURING HYBRID CONTACT LENS CONTAINING HYDROPHOBIC MEMBER**

(57) The objective of the present invention is to provide a method of producing a hybrid contact lens having a hydrophobic component with different properties from those of a contact lens base material embedded therein, the method including a specific procedure and having a smaller adverse impact on the optical properties of the hybrid contact lens. The objective can be achieved by a method of producing a hybrid contact lens having a hydrophobic component embedded therein, including subjecting a forming mold fitting a male mold placing the hydrophobic component on the top surface of the convex portion into a female mold containing a first contact lens-forming composition in the concave portion to a first copolymerization reaction to obtain a first copolymer having the hydrophobic component; subjecting a forming mold fitting a female mold containing a second contact lens-forming composition on the first copolymer in the concave portion into a male mold to a second copolymerization reaction to obtain a second copolymer having the hydrophobic component embedded therein; and subjecting the second copolymer to hydration and swelling treatment to obtain a hybrid contact lens having the hydrophobic component embedded therein.

[Figure 1A]

## Description

Technical Field

The present invention relates to a method of producing a hybrid contact lens having a hydrophobic component embedded therein.

Background Art

Contact lenses are used as devices for vision correction. In recent years, contact lenses that have both their original function for vision correction and new functions have been developed, such as information-display devices with a display projecting text and images, and measuring devices for examining biological functions.

Such contact lenses as the information-display devices and the measuring devices are formed by embedding components for exhibiting new functions into their contact lens base materials. So far, the following contact lenses have been known: a hybrid multifocal contact lens obtained by embedding a hard lens material in a soft lens material (see, for example, Patent Document 1); and a silicone elastomer-hydrogel hybrid contact lens obtained by adhering a silicone elastomer layer to a hydrogel layer with a separation-resistant bond (see, for example, Patent Document 2).

Citation List

Patent Documents

Patent Document 1: JP 2006-515689 A
Patent Document 2: JP 2019-515326 A

Summary of the Invention

Problems to be Solved by the Invention

When a component having different properties from those of a contact lens base material is embedded in the base material, for example, when a hydrophobic component is embedded in hydrogel, the adhesion between the base material and the embedded hydrophobic component can have a significant adverse effect on the safety of wearing the lens. In other words, if the adhesion between the contact lens base material and the embedded hydrophobic component is poor, the base material may break while the contact lens is being worn, and the exposed hydrophobic component may damage ocular tissue. Furthermore, in this case, there is a concern that the poor adhesion may adversely affect the optical properties of the contact lens.

The contact lens described in Patent Document 1 is a hybrid multifocal contact lens having a hard lens material embedded in a soft lens material. However, Patent Document 1 has no specific disclosure of the production method thereof. Therefore, the problem is that the contact lens described in Patent Document 1 cannot be produced according to any specific procedure.

The contact lens described in Patent Document 2 is a hybrid contact lens formed by binding a silicone elastomer layer to a hydrogel layer. The contact lens can be obtained by allowing a portion of the hydrogel material to penetrate into the silicone elastomer, thereby adhering the two to each other. However, in the method described in Patent Document 2, the hydrogel material penetrating into the silicone elastomer can hydrate during the hydration and swelling step, thereby causing water to invade the inside of the silicone elastomer. As a result, the method has the problem that the silicone elastomer can develop white turbidity and its optical property can deteriorate.

Little is known so far about a method of producing a hybrid contact lens having a component with different properties from those of a contact lens base material, in particular having a hydrophobic component embedded therein, the method including a specific procedure and having a smaller adverse impact on the optical properties of the hybrid contact lens.

Therefore, the problems to be solved by the present invention are to provide a method of producing a hybrid contact lens having a hydrophobic component with different properties from those of a contact lens base material embedded therein, the method including a specific procedure and having a smaller adverse impact on the optical properties of the hybrid contact lens.

Means of Solving the Problems

In order to solve the above problems, the present inventors have conducted intensive research on a method of producing a contact lens, which minimizes adverse impacts on its optical properties by maintaining better adhesion between a hydrophobic component to be embedded and a contact lens base material. As a result, the present inventors have come to the idea that if the hydrophobic component had a polymerizable functional group which served as a binding point with the contact lens base material on the surface, the hydrophobic component could chemically bind to the contact lens base material.

As a result of further trial and error, the present inventors have surprisingly found that when the method is performed by bringing the hydrophobic component treated with a silane coupling agent whose organic functional group is a polymerizable functional group into contact with a monomer composition for a contact lens base material in two separate steps, and carrying out a copolymerization reaction in each step, both the embedded hydrophobic component and the contact lens base material remain firmly adhered to each other even after hydration and swelling.

Based on such findings, the present inventors finally succeeded in inventing a method of producing a hybrid contact lens, including subjecting a hydrophobic component having a polymerizable functional group on its surface and a monomer solution for a contact lens base material to copolymerization reactions in two separate steps as a solution to the problems of the present invention. As such, the present invention has been completed on the basis of the findings and successful examples that were first found or obtained by the present inventors.

According to the present invention, the following aspects are provided:

[1] A method of producing a hybrid contact lens having a hydrophobic component embedded therein, comprising:

subjecting a forming mold fitting a male mold in which a hydrophobic component having a polymerizable functional group on the surface is placed on the top surface of the convex portion into a female mold comprising a first contact lens-forming composition in the concave portion to a first copolymerization reaction to obtain a first copolymer having the hydrophobic component from the surface in contact with the male mold toward the inside;
subjecting a forming mold fitting a female mold comprising a second contact lens-forming composition on the first copolymer in the concave portion into a male mold to a second copolymerization reaction to obtain a second copolymer having the hydrophobic component in the inside thereof; and
subjecting the second copolymer to hydration and swelling treatment to obtain a hybrid contact lens having the hydrophobic component embedded therein.

[2] A method of producing a hybrid contact lens having a hydrophobic component embedded therein, comprising:

subjecting a forming mold fitting a female mold in which a hydrophobic component having a polymerizable functional group on the surface is placed on the bottom surface of the concave portion and which comprises a first contact lens-forming composition in the concave portion into a male mold to a first copolymerization reaction to obtain a first copolymer having the hydrophobic component from the surface in contact with the female mold toward the inside;
subjecting a forming mold fitting a female mold comprising a second contact lens-forming composition in the concave portion into a male mold having the first copolymer on the top surface of the convex portion to a second copolymerization reaction to obtain a second copolymer having the hydrophobic component in the inside thereof; and
subjecting the second copolymer to hydration and swelling treatment to obtain a hybrid contact lens having the hydrophobic component embedded therein.

[3] The method of producing a hybrid contact lens according to item [1] or [2], further comprising:
treating the hydrophobic component with a silane coupling agent whose organic functional group is a polymerizable functional group to obtain a hydrophobic component having a polymerizable functional group on the surface.
[4] The method of producing a hybrid contact lens according to any one of items [1] to [3], wherein the hydrophobic component is a hydrophobic component selected from the group consisting of a thermoplastic elastomer, a thermosetting elastomer, a thermosetting polymer, and a thermoplastic polymer.
[5] The method of producing a hybrid contact lens according to any one of items [1] to [4], wherein the hydrophobic component is a hydrophobic component having a through hole.
[6] A hybrid contact lens obtained by the method according to any one of items [1] to [5].

Effects of the Invention

According to the present invention, a hybrid contact lens having a hydrophobic component embedded therein can be produced by a specific procedure with a smaller adverse impact on the optical properties of the contact lens. Namely, according to the present invention, it is possible to produce a hybrid contact lens in which an embedded hydrophobic component chemically binds to the contact lens base material, resulting in reduced detachment between the hydrophobic component and the contact lens base material even when the hydrogel as the base material is hydrated and swollen. Therefore, according to the present invention, it is possible to prevent damage to ocular tissue and deterioration of optical properties caused by exposure of the embedded hydrophobic component while the contact lens is being worn.

According to the present invention, the hybrid contact lens remains transparent suitable for a contact lens even after hydration and swelling, and therefore can be expected to be used as a new type of contact lens that not only serves its original function of correcting vision but also provides functions based on the embedded hydrophobic component.

Brief Description of the Drawing

[Figure 1A] Figure 1A is a schematic diagram of the method of producing a hybrid contact lens according to the first embodiment of the present invention.

[Figure 1B] Figure 1B is a schematic diagram of the method of producing a hybrid contact lens according to the second embodiment of the present invention.

[Figure 2] Figure 2 is an enlarged cross-sectional image of the hybrid contact lens of Example 1, as described in Examples below.

[Figure 3] Figure 3 is an enlarged plan view image of the hybrid contact lens of Example 1, as described in Examples below.

[Figure 4] Figure 4 is an enlarged plan view image of the hybrid contact lens of Reference Example 1, as described in Examples below.

Description of Embodiments

While each embodiment of the present invention will now be described in detail, the present invention may take various forms to the extent that its objective can be achieved.

Unless otherwise specified, each term used herein is used in the meaning commonly used by those skilled in the art, in particular in the chemical fields relating to contact lens, and should not be construed to have any meaning that is unduly limiting. Also, any speculations and theories herein are made on the basis of the knowledge and experiences of the present inventors and as such, the present invention is not bound by any such speculations and theories.

The term "and/or" as used herein means either any one of, any combination of two or more of, or combination of all of listed related items.

The terms "include," "comprise," and "contain" mean that an element(s) other than an element(s) as explicitly indicated can be added as inclusions, which are, for example, synonymous with "at least include," but encompasses the meaning of "consist of" and "substantially consist of". In other words, the terms may mean, for example, to include an element(s) as explicitly indicated as well as any one element or any two or more elements, to consist of an element(s) as explicitly indicated, or substantially consist of an element(s) as explicitly indicated. Such elements include limitations such as components, steps, conditions, and parameters.

"(Meth)acrylate" is a generic term for acrylate and methacrylate. The same applies to (meth)acryloyl group.

Summary of the Invention

According to one aspect of the present invention, there is provided a method of producing a hybrid contact lens having a hydrophobic component embedded therein, the hydrophobic component chemically binding to the contact lens base material. The method according to one embodiment of the present invention can be divided into the two major specific embodiments.

The method according to a first embodiment of the present invention includes the following steps (1) to (3):

(1) subjecting a forming mold fitting a male mold in which a hydrophobic component having a polymerizable functional group on the surface is placed on the top surface of the convex portion into a female mold containing a first contact lens-forming composition in the concave portion to a first copolymerization reaction to obtain a first copolymer having the hydrophobic component from the surface in contact with the male mold to the inside;

(2) subjecting a forming mold fitting a female mold containing a second contact lens-forming composition on the first copolymer in the concave portion into a male mold to a second copolymerization reaction to obtain a second copolymer having the hydrophobic component in the inside thereof; and

(3) subjecting the second copolymer to hydration and swelling treatment to obtain a hybrid contact lens having the hydrophobic component embedded therein.

The method according to a second embodiment of the present invention includes the following steps (1)' to (3)':

(1)' subjecting a forming mold fitting a female mold in which a hydrophobic component having a polymerizable functional group on the surface is placed on the bottom surface of the concave portion and which contains a first contact lens-forming composition in the concave portion into a male mold to a first copolymerization reaction to obtain a first copolymer having the hydrophobic component from the surface in contact with the female mold to the inside;

(2)' subjecting a forming mold fitting a female mold containing a second contact lens-forming composition in the concave portion into a male mold having the first copolymer on the top surface of the convex portion to a second copolymerization reaction to obtain a second copolymer having the hydrophobic component in the inside thereof; and

(3)' subjecting the second copolymer to hydration and swelling treatment to obtain a hybrid contact lens having the hydrophobic component embedded therein.

[Summary of method according to first embodiment of invention]

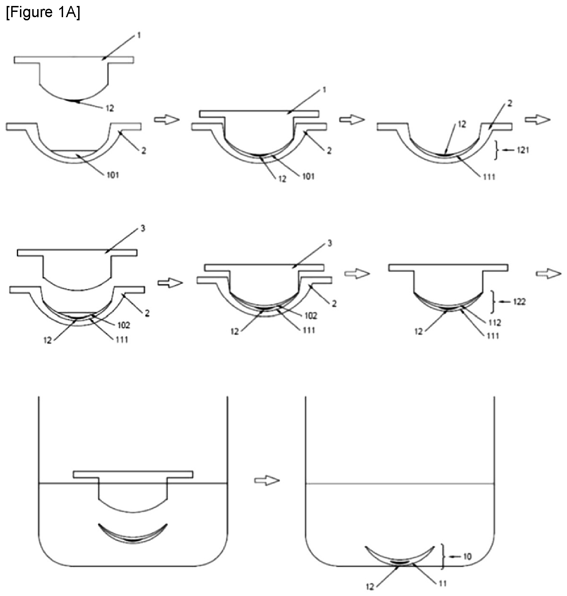

Referring to Figure 1A, a hybrid contact lens 10 obtained by the method according to the first embodiment of the present invention is composed by embedding a hydrophobic component 12 therein via the chemical binding between a contact lens base material 11 made of hydrogel and the hydrophobic component 12.

The method according to the first embodiment of the present invention includes subjecting a forming mold assembled by fitting a male mold 1 in which the hydrophobic component 12 having the surface modified by a polymerizable functional group on the surface is placed on the top surface of the convex portion into a female mold 2 containing a first contact lens-forming composition 101 filled in the concave portion to a first copolymerization reaction to obtain a first copolymer 121 having the hydrophobic component 12 from the surface in contact with the male mold 1 toward the inside. When the forming mold is disassembled, the first copolymer 121 remains on the concave portion of the female mold 2.

Then, by subjecting a forming mold assembled by fitting the female mold 2 containing a second contact lens-forming composition 102 filled from the upper side of the first copolymer 121 in the concave portion into a male mold 3 to a second copolymerization reaction, a second copolymer 122 having the hydrophobic component 12 in the inside thereof (embedded therein) is obtained.

Then, by subjecting the second copolymer 122 to hydration and swelling treatment, a hybrid contact lens 10 having the hydrophobic component 12 embedded therein is obtained. The hybrid contact lens obtained by the method according to the first embodiment of the present invention is superior in the functions provided by the hydrophobic component embedded therein, for example, oxygen permeability, when compared to a contact lens not having the hydrophobic component embedded therein.

[Summary of method according to second embodiment of invention]

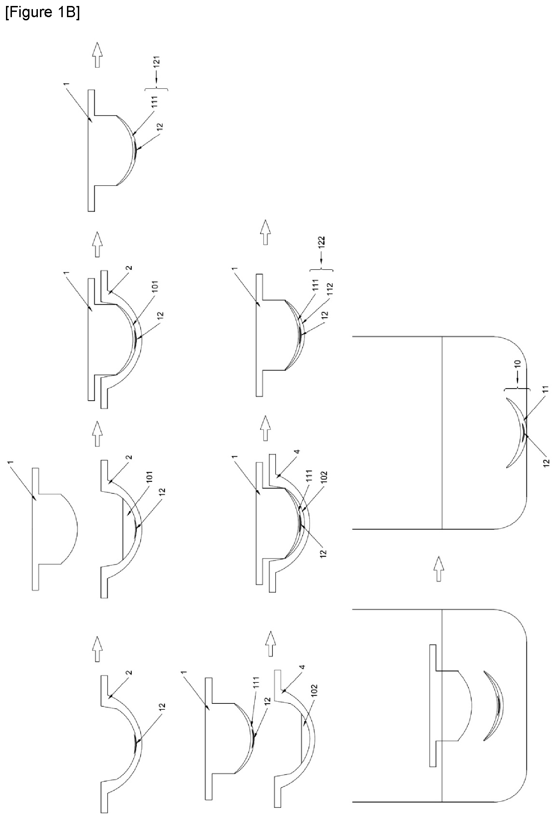

Referring to Figure 1B, a hybrid contact lens 10 obtained by the method according to the second embodiment of the present invention is composed by embedding a hydrophobic component 12 therein via the chemical binding between a contact lens base material 11 made of hydrogel and the hydrophobic component 12.

The method according to the second embodiment of the present invention includes subjecting a forming mold assembled by fitting a female mold 2 in which a hydrophobic component 12 having the surface modified with a polymerizable functional group is placed on the bottom surface of the concave portion and which contains a first contact lens-forming composition 101 filled in the concave portion into a male mold 1 to a first copolymerization reaction to obtain a first copolymer 121 having the hydrophobic component 12 from the surface in contact with the female mold 2 toward the inside. When the forming mold is disassembled, the first copolymer 121 remains adhered to the top surface of the convex portion of the male mold 1.

Then, by subjecting a forming mold assembled by fitting a female mold 4 containing a second contact lens-forming composition 102 filled in the concave portion into a male mold 1 having the first copolymer 121 on the top surface of the convex portion to a second copolymerization reaction, a second copolymer 122 having the hydrophobic component 12 in the inside thereof (embedded therein) is obtained.

Then, by subjecting the second copolymer 122 to hydration and swelling treatment, a hybrid contact lens 10 having the hydrophobic component 12 embedded therein is obtained. The hybrid contact lens obtained by the method according to the second embodiment of the present invention is superior in the functions provided by the hydrophobic component embedded therein, for example, oxygen permeability, when compared to a contact lens not having the hydrophobic component embedded therein.

[Steps (1) and (1)' for obtaining first copolymer]

In step (1), a hydrophobic component having a polymerizable functional group on the surface is placed on the top surface of the convex portion of a male mold. In step (1)', a hydrophobic component having a polymerizable functional group on the surface is placed on the bottom surface of the concave portion of a female mold.

The hydrophobic component may have the desired functions to be imparted to a contact lens. Examples of the hydrophobic component include thermoplastic elastomers classified as styrene, olefin, ester, and urethane; thermosetting elastomers classified as silicone, fluorine, and urethane; thermosetting polymer compounds such as those containing silicone in the molecule; and thermoplastic polymer compounds such as polyethylene, polyolefin and PET. From the viewpoint of the functions imparted to the resulting hybrid contact lens, in particular oxygen permeability, the hydrophobic component may be preferably silicone-based elastomers and silicone-containing polymer compounds.

The method for obtaining the hydrophobic component may be selected as appropriate according to the materials employed in the hydrophobic component. For example, the silicone elastomer is preferably obtained by the LIM molding method, and the silicone-containing polymer compound is preferably obtained by the cast molding method. In the molding methods, it is preferable to use a pair of molds consisting of a female mold with the concave portion and a male mold with the convex portion, which are formed according to the desired shapes. For example, the hydrophobic component may be formed by filling a raw material composition for the hydrophobic component into the concave portion of the female mold, and then subjecting the forming mold, which is assembled by fitting the female mold into the male mold, to treatment under conditions that allow the raw material composition to react, such as heating or light irradiation.

Examples of the raw material composition for the hydrophobic component include commercially available silicone-based elastomer raw material compositions and raw material compositions containing hydrophobic monomers such as silicone-containing monomers described below. Examples of the commercially available raw material composition include those listed in Examples below. In addition, even though the raw material composition for the hydrophobic component and the contact lens-forming composition described below may share some components, the raw material composition for the hydrophobic component is different from the contact lens-forming composition as a whole, and thus the hydrophobic component differs from the contact lens base material.

The raw material composition for the hydrophobic component may further contain a polymerization initiator. When the raw material composition for the hydrophobic component contains a polymerization initiator, the polymerization initiator is present on the surface and/or inside of the resulting hydrophobic component, thereby allowing the first and second copolymerization reactions carried out in the method according to one embodiment of the present invention to achieve enhanced reactivity. The polymerization initiator used may be those described below.

The hydrophobic component may be processed and/or modified according to the desired properties to be imparted to a contact lens. For example, in order to exhibit excellent oxygen permeability and vision correction functions, the hydrophobic component preferably has one or more through-holes.

The hydrophobic component has a polymerizable functional group on the surface. The method for modifying the surface of the hydrophobic component by the polymerizable functional group is preferably a method including orienting the polymerizable functional group on the surface of the hydrophobic component so that the polymerizable functional group can copolymerize with the polymerizable functional group of the contact lens-forming monomer in contact with the hydrophobic component. Specifically, the method for modifying the surface of the hydrophobic component with a polymerizable functional group is preferably a method including reacting the hydrophobic component with a silane coupling agent whose organic functional group is the polymerizable functional group, from the viewpoint of efficiently orienting the polymerizable functional group on the surface of the hydrophobic component. In addition, when the method for modifying the surface of the hydrophobic component with the polymerizable functional group used is a method including irradiating the hydrophobic component with oxygen plasma and then reacting the resultant with a (meth)acrylic compound having an isocyanate group, the hydrophobic component may separate from the contact lens base material, resulting in poor adhesion between them.

The silane coupling agent may have a structure in which the one end is a hydrolyzable group that serves as a binding site with the hydrophobic component and the other end is an organic functional group corresponding to a polymerizable functional group that can bind to the polymerizable functional group of the contact lens-forming monomer by the free radical reaction, such as allyl group, vinyl group, acryloyl group, methacryloyl group, and styrenyl group. Examples of such a silane coupling agent include 3-(meth)acryloxypropyltrimethoxysilane, trimethoxy(7-octen-1-yl)silane, and N-[2-(N-vinylbenzylamino)ethyl]-3-aminopropyltrimethoxysilane hydrochloride, preferably 3-methacryloyloxypropyltrimethoxysilane, from the viewpoint of easy handling and reactivity.

The hydrophobic component is treated with the silane coupling agent whose organic functional group is the polymerizable functional group to obtain the hydrophobic component having the polymerizable functional group on the surface. Examples of the method for treating the hydrophobic component with the silane coupling agent include general methods such as the method including immersing the hydrophobic component in an aqueous solution containing the silane coupling agent and subjecting the solution to heat treatment. From the viewpoint of enhanced reactivity, the silane coupling agent-containing aqueous solution may contain acids such as acetic acid, and nonionic surfactants such as polyoxyethylene polyoxypropylene block polymer. The hydrophobic component is preferably subjected to activation pretreatment such as irradiating the surface of the hydrophobic component with plasma, in order to improve the affinity between the hydrophobic component and the aqueous solution, thereby effectively introducing the polymerizable functional group thereto.

By carrying out such a step, the surface of the hydrophobic component can be modified with the polymerizable functional group. The method according to one embodiment of the present invention preferably includes an additional step of treating the hydrophobic component with the silane coupling agent whose organic functional group is the polymerizable functional group to obtain the hydrophobic component having the polymerizable functional group on its surface, as a step prior to step (1) or (1)'.

The method for placing the hydrophobic component having the polymerizable functional group on the surface on the top surface of the convex portion of the male mold or on the bottom surface of the concave portion of the female mold is not particularly limited. For example, the method may be carried out by gripping the hydrophobic component having the polymerizable functional group on the surface with tweezers or other instruments, and then placing the hydrophobic component on the top surface of the convex portion of the male mold or on the bottom surface of the concave portion of the female mold.

In steps (1) and (1)', a first contact lens-forming composition is filled to be contained in the concave portion of the female mold. In step (1)', the first contact lens-forming composition is filled to cover the hydrophobic component placed on the bottom surface of the concave portion.

The contact lens-forming composition may be those used to form the base material of the hybrid contact lens obtained by the method according to one embodiment of the present invention. The hybrid contact lens is composed of hydrogel.

The hydrogel is based on a polymerized compound (polymer) of monomer components including a hydrophilic monomer. The hydrogel is swollen by an aqueous solution such as water or a water-containing solution, and retains the aqueous solution in the polymer matrix. When used herein, the polymer itself, excluding the aqueous solution, is referred to as a hydrogel (contact lens) base material. The polymer (polymerized compound) is produced by polymerization of monomers, and the constituent unit derived from each monomer in the polymer is also referred to as a portion or residue.

Specific examples of the hydrogel include hydrogel produced with hydrophilic monomers, hydrogel produced with hydrophilic monomers and monomers copolymerizable with hydrophilic monomers such as hydrophobic monomers and cross-linking monomers.

The hydrogel has at least the hydrophilic monomer as a residue. Therefore, the contact lens-forming composition may contain the hydrophilic monomer, and may further contain other monomer components such as the hydrophobic monomer, the cross-linking monomer, and other monomers copolymerizable with the hydrophilic monomer, which are selected according to the desired properties imparted to the hybrid contact lens and the polymerization initiator that can promote the copolymerization reaction of the monomers.

The hydrophilic monomer may be a polymerizable compound having in the molecule at least one hydrophilic group and at least one polymerizable group such as (meth)acryloyl group and vinyl group. Examples of the monomer include hydroxymethyl (meth)acrylate, 2-hydroxyethyl (meth)acrylate, 2-hydroxypropyl (meth)acrylate, 2,3-dihydroxypropyl (meth)acrylate, 2-polyethylene glycol mono(meth)acrylate, 2-polypropylene glycol (meth)acrylate, N,N-dimethyl (meth)acrylamide, N,N-diethyl (meth)acrylamide and N-vinylpyrrolidone, preferably 2-hydroxyethyl methacrylate. The hydrophilic monomer may be used either individually or in combination of two or more of those listed above.

The content of the hydrophilic monomer may be appropriately set as long as the content is an amount to the extent that the polymer obtained by copolymerization of monomer components including the hydrophilic monomer is capable of forming hydrogel. Examples of the content include preferably from 50 wt% to 99 wt%, more preferably from 60 wt% to 98 wt%, and still more preferably from 70 wt% to 96 wt% relative to the total amount of monomer components.

The hydrophobic monomer may be a polymerizable compound that has no hydrophilic group and has a polymerizable group such as (meth)acryloyl group and vinyl group in the molecule. Examples of the monomer include (meth)acrylic monomers such as trifluoroethyl methacrylate, methacrylamide, siloxanyl methacrylate, methyl methacrylate, n-butyl methacrylate, tert-butyl methacrylate, benzyl methacrylate, ethylhexyl methacrylate, lauryl (meth)acrylate, and tridecyl methacrylate; and silicone-containing monomers such as $\alpha$-mono(methacryloyloxymethyl)siloxane, $\alpha,\omega$-di(methacryloyloxymethyl) polydimethylsiloxane, $\alpha$-mono(3-methacryloyloxypropyl) polydimethylsiloxane, $\alpha,\omega$-di(3-methacryloyloxypropyl) polydimethylsiloxane, $\alpha$-mono(3-methacryloyloxybutyl) polydimethylsiloxane, $\alpha,\omega$-di(3-methacryloyloxybutyl) polydimethylsiloxane, $\alpha$-monovinyl polydimethylsiloxane, $\alpha,\omega$-divinyl polydimethylsiloxane, 3-tris(trimethylsiloxy)silylmethyl (meth)acrylate, 3-tris(trimethylsiloxy)silylpropyl (meth)acrylate, 3-methylbis(trimethylsiloxy)silylmethyl (meth)acrylate, 3-methylbis(trimethylsiloxy)silylpropyl (meth)acrylate, 3-trimethylsiloxydimethylsilylmethyl (meth)acrylate, 3-trimethylsiloxydimethylsilylpropyl (meth)acrylate and 3-methyldimethoxysilylpropyl (meth)acrylate; and halogen-containing monomers such as octafluoropentyl methacrylate. The hydrophobic monomer may be used either individually or in combination of two or more of those listed above.

The content of the hydrophobic monomer may be adjusted appropriately depending on the desired optical and physicochemical properties to be imparted to the hydrogel, and is not particularly limited. Examples of the content include preferably from 0 wt% to 20 wt%, and more preferably from 1 wt% to 10 wt% relative to the total amount of monomer components. When the content of the hydrophobic monomer is more than 20 wt%, the resulting hydrogel may become less flexible and have the impaired wearing feeling.

The cross-linking monomer may be a polymerizable compound that has two or more polymerizable groups such as (meth)acryloyl group and vinyl group in the molecule. Examples of the monomer include ethylene glycol di(meth) acrylate, triethylene glycol di(meth)acrylate, methylene bis(meth)acrylamide, 2-hydroxy-1,3-di(meth)acryloxypropane and trimethylolpropane tri(meth)acrylate, preferably triethylene glycol di(meth)acrylate. The cross-linking monomer may be used either individually or in combination of two or more of those listed above.

The content of the cross-linking monomer may be set appropriately according to the desired network structure formation and mechanical strength to be imparted to the hydrogel. Examples of the content include preferably from 0.1 wt% to 10 wt%, and more preferably from 1 wt% to 6 wt% relative to the total amount of monomer components. When the content of the cross-linking monomer is more than 10 wt%, the resulting hydrogel may become less flexible and have the impaired wearing feeling, thereby being not suitable for a contact lens.

The polymerization initiator is used for copolymerization of the monomer components, and may be set as appropriate according to the properties of the monomers contained in the contact lens-forming composition or other conditions. Examples of the polymerization initiator include general photo polymerization initiators, for example, photo radical polymerization initiators such as benzophenone, 1-hydroxycyclohexylphenyl ketone, 2,2-dimethoxy-2-phenylacetophenone, 2-methyl-4'-(methylthio)-2-morpholinopropiophenone, 2-benzyl-2-(dimethylamino)-4'-morpholinobutyrophenone, diphenyl (2,4,6-trimethylbenzoyl) phosphine oxide, phenylbis (2,4,6-trimethylbenzoyl) phosphine oxide; photocationic polymerization initiators such as bis(4-tertiary butylphenyl) iodonium hexafluorophosphate, 2-(1,3-benzodioxol-5-yl)-4,6-bis(trichloromethyl)-1,3,5-triazine, (4-hydroxyphenyl)dimethylsulfonium hexafluorophosphate; photoanionic polymerization initiators such as 1,2-dicyclohexyl-4,4,5,5-tetramethylbigazinium n-butyltriphenylborate; and general thermal polymerization initiators, for example, peroxidic polymerization initiators such as lauroyl peroxide, cumene hydroperoxide, and benzoyl peroxide; azoic polymerization initiators such as azobis-dimethylvaleronitrile, and azobis-isobutyronitrile, preferably the photo polymerization initiators. The polymerization initiator may be used either individually or in combination of two or more of those listed above.

The amount of the polymerization initiator added may be appropriately set as long as the amount can achieve the copolymerization reaction of the monomers. Examples of the amount include preferably from 10 ppm to 7,000 ppm relative to the total amount of monomer components.

The contact lens-forming composition may further contain other components known in the art, if necessary. Examples of such other components include, but are not limited to, a UV absorber, a diluent, a stabilizer, a dye, a pigment, an antimicrobial compound, and a mold release agent. Some of the other components are listed below, but they are listed only as examples, and the other components are not limited thereto.

Examples of the UV absorber include 2-hydroxy-4-(meth)acryloyloxybenzophenone, 2-hydroxy-4-(meth)acryloyloxy-5-t-butylbenzophenone, 2-(2'-hydroxy-5'-(meth)acryloyloxyethylphenyl)-2H-benzotriazole, 2-(2'-hydroxy-5'-(meth)acryloyloxyethylphenyl)-5-chloro-2H benzotriazole, 2-hydroxy-4-methacryloyloxymethylbenzoic acid phenyl, and methacrylic acid 2-[3-(2H- benzotriazol-2-yl)-4-hydroxyphenyl] ethyl. The UV absorber may be used either individually or in combination of two or more of those listed above. The content of the UV absorber may be set to any amount according to the desired UV absorption ability.

Examples of the diluent include water, dimethyl sulfoxide, polyethylene glycol 200, and polyethylene glycol 600. The diluent may be either individually or in combination of two or more of those listed above. The content of the diluent may be set to any amount according to the desired physical properties.

The monomer mixture solution and the diluent is preferably in a prescribed relationship from the viewpoint of achieving the desired moisture content and size of the hydrogel. For example, the ratio of the monomer mixture solution relative to the diluent (monomer mixture solution:diluent) is preferably from 10:0 to 6:4, and more preferably from 10:0 to 7:3.

Examples of the method for obtaining the contact lens-forming composition includes preferably stirring and dissolving a mixture containing the monomer components and the polymerization initiator, and optionally the other components, according to general methods. Specific examples of the method include a method of stirring and mixing the mixture of the above components using a magnetic stirrer or other instruments in a predetermined amount so that the resulting copolymer can attain the desired physical properties.

In step (1), the female mold containing the first contact lens-forming composition in the concave portion is fitted into the male mold with the hydrophobic component having the polymerizable functional group on its surface placed on the top surface of the convex portion, and they are sealed, thereby obtaining an assembled forming mold composed of the male and female molds. The forming mold is subjected to a first copolymerization reaction to obtain a first copolymer having the hydrophobic component from the surface in contact with the male mold to the inside. Similarly, in step (1)', the female mold containing the hydrophobic component having the polymerizable functional group and the first contact lens-forming composition in the concave portion is fitted into the male mold, and they are sealed, thereby obtaining an assembled forming mold composed of the male and female molds. The forming mold is subjected to the first copolymerization reaction to obtain the first copolymer having the hydrophobic component from the surface in contact with the female mold to the inside.

The first copolymerization reaction is carried out by heating, light irradiation or other treatment of the forming mold containing the first contact lens-forming composition, according to the type of the copolymerization reaction. For example, when the copolymerization reaction employs thermal polymerization, the reaction may be carried out by heating the forming mold in a thermostatic bath at a temperature in the range of 25 °C to 120 °C, either stepwise or continuously, for a reaction time of 5 hours to 120 hours. When the copolymerization reaction employs photo polymerization, the reaction may be carried out by irradiating the forming mold with ultraviolet light for 1 minute to 5 hours.

The forming mold composed of the male and female molds used may be those normally used in producing contact lenses. For example, the resin employed for the forming mold may be insoluble in the contact lens base raw material and inert to plasma. Specific examples of the resin include polyethylene, polypropylene, ethylene vinyl acetate, polystyrene, AS resins, ABS resins, polymethylmethacrylate, polyvinyl chloride, cellulose resins, polyacetal, polyamide, polybutylene terephthalate, polyethylene terephthalate, polycarbonate, modified polyphenylene ether, polyphenylene sulfide, polyether ether ketone, liquid crystal polymers, polysulfone, polyethersulfone, polyarylate, polyamideimide, polyetherimide, polymethylpentene, phenol resins, urea resins, melamine resins, and epoxy resins. The resin may be either individually or in combination of two or more of those listed above, preferably polypropylene, from the viewpoint of formability.

From the viewpoint of working efficiency of step (2), the first copolymer after step (1) preferably may adhere to the female mold. In the same manner, from the viewpoint of working efficiency of step (2)', the first copolymer after step (1)' preferably may adhere to the male mold. The method for adhering the first copolymer to the female or male mold include a method of physically treating the surface of the concave portion of the female mold or the convex portion of the male mold by corona discharge and plasma irradiation, and a method of preparing the female mold made of a different material from that of the male mold or the male mold made of a different material from that of the female mold, in view of affinity with the contact lens-forming composition.

Examples of the method for physical surface treatment include treating the surface of the concave portion of the female mold or of the convex portion of the male mold with corona discharge or plasma irradiation under conditions that can improve the hydrophilicity thereof. In addition, examples of the method for preparing the female mold made of a different material from that of the male mold or the male mold made of a different material from that of the female mold include preparing the female mold made of a resin having higher affinity with the first copolymer than that of the male mold or preparing the male mold made of a resin having higher affinity with the first copolymer than that of the female mold. By such methods, when disassembling the male and female molds after the first copolymerization reaction, the first copolymer having the hydrophobic component can selectively adhere to the surface of the concave portion of the female mold after step (1), or the first copolymer having the hydrophobic component can selectively adhere to the surface of the convex portion of the male mold after step (1)'.

[Steps (2) and (2)' for obtaining second copolymer]

In step (2), the female mold contains the first copolymer obtained in step (1), and the second contact lens-forming composition is filled into the concave portion of the female mold so as to cover the first copolymer, thereby preparing the female mold filled with the second contact lens-forming composition on the first copolymer. The female mold is then fitted into the male mold. In step (2)', the female mold containing the second contact lens-forming composition is prepared, and the female mold is then fitted into the male mold having the first copolymer obtained in step (1)'. In steps (2) and (2)', the assembled forming mold composed of the female and male molds is subjected to the second copolymerization reaction. As a result, the second copolymer having the hydrophobic component embedded therein is obtained, the hydrophobic component being held in place by being sandwiched between the first contact lens-forming composition (copolymer) and the second contact lens-forming composition (copolymer).

The female molds used in step (2) may be the same as or different from the female mold used in step (1), respectively. For example, when collecting the first copolymer contained in the concave portion of the female mold in step (1), the female mold containing the first copolymer may be used as is in step (2). In the same manner, the male molds used in step (2)' may be the same as or different from the male mold used in step (1)', respectively. For example, when collecting the first copolymer adhered to the convex portion of the male mold in step (1)', the male mold having the first copolymer adhered thereto may be used as is in step (2)'.

The second contact lens-forming composition may be the same as or different from the first contact lens-forming composition used in step (1) or (1)'. The second copolymerization reaction may be carried out according to the type of the second contact lens-forming composition and may be carried out under the same conditions as or different conditions from those of the first copolymerization reaction.

The second copolymer obtained in step (2) preferably remains adhered to the top surface of the convex portion of the male mold after the second copolymerization reaction in view of ease of collection. The method for adhering the second copolymer to the male mold may be carried out by substituting the female mold for the male mold in the method for adhering the first copolymer to the female mold performed in step (1). The second copolymer obtained in step (2)' preferably remains adhered to the top surface of the convex portion of the male mold after the second copolymerization reaction.

While the method for adhering the first copolymer to the female mold in step (1) or the method for adhering the second copolymer to the male mold in step (2) may apply to the above-mentioned methods, the method may be preferably the physical treatment method using corona discharge or plasma irradiation because of allowing the surface of the molds to be easily modified. While the method for adhering the first copolymer to the male mold in step (1)' may apply to the above-mentioned methods, the method may be preferably the physical treatment method using corona discharge or plasma irradiation because of allowing the surface of the molds to be easily modified. When the male mold is physically treated by corona discharge or plasma irradiation before step (1)', the second copolymer can generally adhere to the male mold after step (2)'.

[Steps (3) and (3)' for obtaining hybrid contact lens having hydrophobic component embedded therein]

In step (3) and (3)', the second copolymer is subjected to hydration and swelling treatment to obtain the hybrid contact lens having the hydrophobic component embedded therein. In step (3) and (3)', for example, after disassembling the female and male molds, the male mold with the second copolymer adhered thereto may be immersed in an aqueous solution to hydrate and swell the second copolymer. When the second copolymer is hydrated and swollen, the second copolymer detaches from the male mold, thereby yielding the hybrid contact lens having the hydrophobic component embedded therein. In addition, the second copolymer and/or the hybrid contact lens may be subjected to processing treatment such as cutting and polishing, if necessary.

The hydration and swelling treatment may be hydration and swelling treatment using a swelling solution employed in the method of producing normal contact lenses. Examples of the treatment include hydration and swelling treatments using the swelling solution including water, saline, isotonic buffer solutions such as phosphate buffers, organic solvents, and mixtures of water and organic solvents.

Examples of the organic solvent used for the swelling solution include primary and secondary alcohols, specifically methanol, ethanol, propanol, isopropanol, n-butanol, and isobutanol. The organic solvent used in the hydration and swelling treatment may be used individually or combined as a mixture of two or more of those listed above.

For example, the hydration and swelling treatment in step (3) or (3)' is preferably carried out by immersing the male mold with the second copolymer adhered thereto, or the second copolymer, in the swelling solution heated to a temperature of 60 °C to 100 °C for about 10 minutes to 1 hour to bring the second copolymer into the swollen state. In the hydration and swelling treatment, unreacted components contained in the second polymer are preferably removed.

The hybrid contact lens having the hydrophobic component embedded therein obtained in step (3) or (3)' is preferably subjected to sterilization treatment that is usually employed in the method of producing contact lenses, for example, autoclave sterilization treatment.

The method according to one embodiment of the present invention may be a method including carrying out steps (1) to (3) or (1)' to (3)', and may further include various steps or operations between or during the steps so long as the problems of the present invention can be solved. The method preferably includes carrying out steps (1) to (3) or (1)' to (3)' serially.

[Hybrid contact lens according to first embodiment of invention]

According to another aspect of the present invention, there is provided the hybrid contact lens having the hydrophobic component embedded therein, obtained by the method according to one embodiment of the present invention.

The hybrid contact lens having the hydrophobic component embedded therein may be one obtained by the method according to one embodiment of the present invention, and may have various properties. The embedded hydrophobic component chemically binds to the contact lens base material, thereby having excellent adhesiveness between the hydrophobic component and the contact lens base material, and between the contact lens base materials. In addition, in relation to the excellent adhesiveness, the hybrid contact lens having the hydrophobic component embedded therein has good contact lens formability and/or transparency.

The adhesiveness, contact lens formability and transparency of the hybrid contact lens having the hydrophobic component embedded therein can be evaluated by the method described in Examples below. While the hybrid contact lens having the hydrophobic component embedded therein may be evaluated as "+" for adhesiveness, the hybrid contact lens is evaluated preferably as "+" for adhesiveness and "+" for contact lens formability or transparency, and more preferably as "+" for all of adhesiveness, contact lens formability and transparency.

While the usage and application of the hybrid contact lens having the hydrophobic component embedded therein are not particularly limited, the hybrid contact lens may be used as medical devices for vision correction in the same manner as conventional hydrogel contact lenses. The hybrid contact lens having the hydrophobic component embedded therein may also have other functions different from vision correction relying on the nature of the embedded hydrophobic component. The hybrid contact lens having the hydrophobic component embedded therein is preferably one having improved oxygen permeability.

The present invention will now be described in further detail with reference to Examples, which are not intended to limit the present invention. The present invention may take various embodiments to the extent that the objectives of the present invention are achieved.

Examples

[1. Production of hydrophobic components]

(1-1) Hydrophobic component 1

The elastomer stock solution ("MED-6015"; NuSil Technology) consisting of two solutions with different viscosities (Parts A and B) was used. The mixture prepared by weighing Parts A and B at a mixing ratio being A:B = 10:1 was stirred at room temperature for 30 minutes using a magnetic stirrer. The resulting elastomer mixture was left to stand in a vacuum desiccator for 10 minutes to remove unwanted gases.

The elastomer mixture was injected into the female mold of the polypropylene resin forming mold, which consists of a pair of female and male molds. The female mold was then fitted into the male mold. The resin mold containing the elastomer mixture was left to stand in a thermostatic bath set at 90 °C for 1 hour to cure the elastomer mixture.

After cooling the resin mold after curing treatment to room temperature, the male and female molds were disassembled, and hydrophobic component 1 (silicone elastomer) was removed from the forming mold. The hydrophobic component 1 had a diameter of 9.00 mm, a radius of curvature near the center of 9.00 mm, and a thickness of 0.1 mm.

(1-2) Hydrophobic component 2

Hydrophobic component 2 was obtained in the same manner as in section (1-1) above, except that "MED-6010" (NuSil Technology) was used as the elastomer stock solution.

(1-3) Hydrophobic component 3

To 4 mL of acetone in a container, 30 mg of benzophenone was added, and the mixture was stirred at room temperature for 5 minutes to prepare a benzophenone-acetone solution.

Hydrophobic component 3 was obtained in the same manner as in section (1-1) above, except that a 4% (external addition concentration) benzophenone-acetone solution was used relative to 0.97 mL of the elastomer stock solution "MED-6015".

(1-4) Hydrophobic component 4

To the monomer solution containing 55 wt% $\alpha,\omega$-di(3-methacryloyloxypropyl)polydimethylsiloxane, 15 wt% tris(trimethylsiloxy)silylpropyl methacrylate, 15 wt% octafluoropentyl methacrylate and 15 wt% tridecyl methacrylate, azobisisobutyronitrile (AIBN) was added at a concentration of 3,000 ppm (external addition concentration) relative to the total amount of the monomer solution, and the mixture was then stirred and mixed to obtain a monomer mixture solution. The resulting monomer mixture solution was filled into a forming mold and subjected to the copolymerization reaction by heating the forming mold from 30 °C to 110 °C over 17 hours. After cooling the forming mold after the copolymerization reaction to room temperature, the male and female molds were disassembled, and hydrophobic component 4 (silicone-containing polymer compound) was removed from the forming mold.

[2. Production of contact lens-forming composition]

(2-1) Contact lens-forming composition 1

The monomer components comprised of 88 wt% 2-hydroxyethyl methacrylate (HEMA), 7 wt% methylmethacrylate (MMA) and 5 wt% triethylene glycol dimethacrylate (3EG) were weighed and stirred at room temperature for 30 minutes to combine the components thoroughly to obtain a homogeneous monomer mixture solution.

To prepare a mixture solution, 80 wt% of the monomer mixture solution prepared above and 20 wt% of polyethylene glycol 600 (PEG600) were weighed. To the resulting solution, bis(2,4,6-trimethylbenzoyl)phenylphosphine oxide was then added at a concentration of 5,000 ppm (external addition concentration) relative to the total amount of the solution, and the mixture was stirred and mixed to obtain contact lens-forming composition 1.

(2-2) Contact lens-forming composition 2

To prepare a solution, 90 wt% of the monomer mixture solution prepared in section (2-1) above and 10 wt% of polyethylene glycol 600 (PEG600) were weighed. To the resulting solution, bis(2,4,6-trimethylbenzoyl)phenylphosphine oxide was then added at a concentration of 5,000 ppm (external addition concentration) relative to the total amount of the solution, and the mixture was stirred and mixed to obtain contact lens-forming composition 2.

(2-3) Contact lens-forming composition 3

To 100 wt% of the monomer mixture solution prepared in section (2-1) above, bis(2,4,6-trimethylbenzoyl) phenylphosphine oxide was then added at a concentration of 5,000 ppm (external addition concentration) relative to the monomer mixture solution, and the mixture was stirred and mixed to obtain contact lens-forming composition 3.

[3. Production of hybrid contact lens]

(3-1) Hybrid contact lenses of Example 1 and Reference Example 1

To prepare an aqueous solution, 1.0 wt% of 3-methacryloxypropyltrimethoxysilane (silane coupling agent), 1.0 wt% of acetic acid, and 0.5 wt% of polyoxyethylene polyoxypropylene block polymer "Lutrol F127" (BASF Japan), which is a nonionic surfactant, were weighed and stirred at room temperature for 30 minutes to combine the components thoroughly to obtain a homogeneous silane coupling agent-containing aqueous solution.

The surface of the hydrophobic component 1 was treated with oxygen plasma under the conditions of a vacuum degree of 8 Pa and a current value of 20 mA for 30 seconds. The treated hydrophobic component 1 was immersed in the silane coupling agent-containing aqueous solution and subjected to silane coupling treatment by being left to stand in the thermostatic bath set at 50 °C for 3 hours to obtain a silane coupling treated hydrophobic component 1.

The silane coupling treated hydrophobic component 1 was taken out from the aqueous solution, rinsed lightly with pure water to remove an excess aqueous solution, and then dried in the thermostatic bath set at 90 °C for 1 hour to obtain a hydrophobic component 1 having polymerizable functional group introduced on the surface.

The hydrophobic component 1 having polymerizable functional group introduced on the surface was gripped with tweezers and placed on the top surface of the convex portion of the male mold (having the same radius of curvature as the forming mold used in producing the hydrophobic component 1) in the forming mold made of polypropylene resin.

The inner surface of the female mold was treated with vacuum plasma under the conditions of a vacuum degree of 8 Pa and a current value of 20 mA for 3 seconds. The appropriate amount of the contact lens-forming composition 1 that corresponds to a contact lens base raw material was injected into the concave portion of the female mold after vacuum plasma treatment. The first copolymerization reaction was carried out by subjecting the forming mold assembled by fitting the male mold with the hydrophobic component 1 placed into the female mold containing the contact lens-forming composition 1 to UV irradiation treatment at room temperature for 30 minutes using a UV irradiation device.

After disassembling the male and female molds, an appropriate amount of contact lens-forming composition 1 was injected into the female mold in which the first copolymer having the hydrophobic component 1 from the surface in contact with the male mold to the inside was adhered to the surface of the concave portion. The convex portion of the male mold was subjected to vacuum plasma treatment under the conditions of a vacuum degree of 8 Pa and a current value of 20 mA for 8 seconds. The second copolymerization reaction was carried out by subjecting the forming mold assembled by fitting the male mold after the vacuum plasma treatment into the female mold above to UV irradiation treatment at room temperature for 30 minutes using a UV irradiation device.

After disassembling the female and male molds, the male mold, on the surface of the convex portion of which the second copolymer having the hydrophobic component 1 embedded therein was adhered, was placed in contact with a phosphate buffer at 60 °C with the convex portion facing downward and left to stand for 30 minutes so that the second copolymer swelled and detached, thereby obtaining the hydrogel from the male mold. The swollen hydrogel was transferred to a new phosphate buffer and subjected to autoclave sterilization treatment at 121 °C for 30 minutes to obtain hybrid contact lens of Example 1.

The hybrid contact lens of Example 1 had a diameter of 14.36 mm, a radius of curvature near the center of 9.00 mm, and a thickness of 0.2 mm.

On the other hand, the hybrid contact lens of Reference Example 1 was obtained in the same manner as described above, except that no silane coupling treatment was carried out.

(3-2) Hybrid contact lenses of Examples 2 to 4

The hybrid contact lenses of Examples 2 to 4 were obtained in the same manner as in section (3-1) above, except that the hydrophobic components 2 to 4 were used.

(3-3) Hybrid contact lenses of Examples 5 and 6

The hybrid contact lenses of Examples 5 and 6 were obtained in the same manner as in section (3-1) above, except that the contact lens-forming compositions 2 and 3 were used.

(3-4) Hybrid contact lenses of Example 7

The hybrid contact lens of Example 7 was obtained in the same manner as in section (3-1) above, except that trimethoxy(7-octen-1-yl)silane was used as a silane coupling agent.

(3-5) Hybrid contact lens of Example 8

The hydrophobic component 1 having polymerizable functional group introduced on the surface was obtained in the same manner as in section (3-1) above.

The hydrophobic component 1 having polymerizable functional group introduced on the surface was gripped with tweezers and placed on the bottom surface of the concave portion of the female mold (having the same radius of curvature as the forming mold used in producing the hydrophobic component 1) in the forming mold made of polypropylene resin.

The convex portion surface of the male mold was subjected to vacuum plasma treatment under the conditions of a vacuum degree of 8 Pa and a current value of 20 mA for 3 seconds. An appropriate amount of the contact lens-forming composition 1 that corresponds to a contact lens base raw material was injected into the concave portion of the female mold with the hydrophobic component 1 placed. The first copolymerization reaction was carried out by subjecting the forming mold assembled by fitting the male mold after the vacuum plasma treatment into the female mold containing the hydrophobic component 1 and the contact lens-forming composition 1 to UV irradiation treatment at room temperature for 30 minutes using a UV irradiation device.

After being separated from the male mold in which the first copolymer having the hydrophobic component 1 from the surface in contact with the female mold toward the inside was adhered to the surface of the convex portion, an appropriate amount of contact lens-forming composition 1 was injected into the female mold. The second copolymerization reaction was carried out by subjecting the forming mold assembled by fitting the male mold above into the female mold above to UV irradiation treatment at room temperature for 30 minutes using a UV irradiation device.

After disassembling the female and male molds, the male mold, on the surface of the convex portion of which the second copolymer having the hydrophobic component 1 embedded therein was adhered, was placed in contact with a phosphate buffer at 60 °C with the convex portion facing downward and left to stand for 30 minutes so that the second copolymer swelled and detached, thereby obtaining the hydrogel from the male mold. The swollen hydrogel was transferred to a new phosphate buffer and subjected to autoclave sterilization treatment at 121 °C for 30 minutes to obtain hybrid contact lens of Example 8.

(3-6) Hybrid contact lenses of Comparative Examples 1 and 2

The hybrid contact lens of Comparative Example 1 was obtained in the same manner as in section (3-1) above, except that 3-aminopropyltriethoxysilane was used as a silane coupling agent. The hybrid contact lens of Comparative Example 2 was obtained in the same manner as in section (3-1) above, except that 3-glycidoxypropyltrimethoxysilane was used as a silane coupling agent.

[4. Evaluation Method]

The hybrid contact lenses of Examples 1 to 8, Comparative Examples 1 and 2, and Reference Example 1 were evaluated according to the following evaluation criteria.

(4-1) Adhesiveness

The hybrid contact lenses of Examples 1 to 8, Comparative Examples 1 and 2, and Reference Example 1 were immersed in 100% ethanol solution at room temperature to become the excessive swelling state. For the hybrid contact lens in the excessive swelling state, the presence or absence of separation between the hydrophobic component and the contact lens base material was visually observed, and evaluated according to the following criteria.
+: No separation was observed.
-: Separation was observed.

(4-2) Contact lens formability

For the hybrid contact lenses of Examples 1 to 8, distortion of the peripheral shape, as an index of contact lens formability, was observed using the dimension analyzer (manufactured by JCF/OPTIMEC), and evaluated according to the following criteria.
+: No distortion was observed.
-: Distortion was observed.

(4-3) Transparency

For the hybrid contact lenses of Examples 1 to 8, transparency was evaluated according to the following method.
The light transmittance at the center of the hybrid contact lens was read every 10 nm in the range of wavelength of 380 nm to 780 nm. The luminous transmittance $_{TV}$ was then calculated according to the following formula 1 by the method according to JIS Z 8722. The weighting coefficient was calculated with a view field of 10° and a standard illuminant of D65.

[Equation 1]

$$\tau_v = Y = K \cdot \sum_{380}^{780} S(\lambda) \cdot y(\lambda) \cdot T(\lambda) \cdot \Delta\lambda$$

$$K = \frac{100}{\sum_{380}^{780} S(\lambda) \cdot y(\lambda) \cdot \Delta\lambda}$$

T ($\lambda$): Solid-angle transmittance
S($\lambda$): Value at wavelength $\lambda$ of D65 spectral distribution of standard light
y($\lambda$): Value of color matching functions in X10Y10Z10 color system (spectral luminous efficiency)
S($\lambda$)y($\lambda$): weighting coefficient
$\Delta\lambda$: Wavelength interval (10 nm)

Using the calculated luminous transmittance, transparency was evaluated according to the following criteria.
+: Luminous transmittance equal to or more than 90%
-: Luminous transmittance less than 90%

[5. Evaluation results]

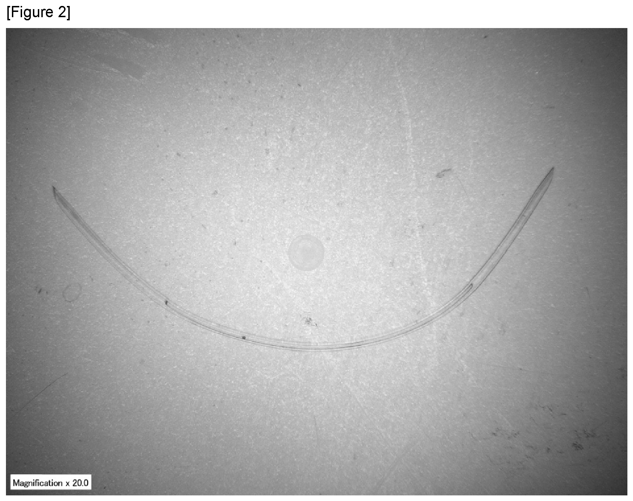

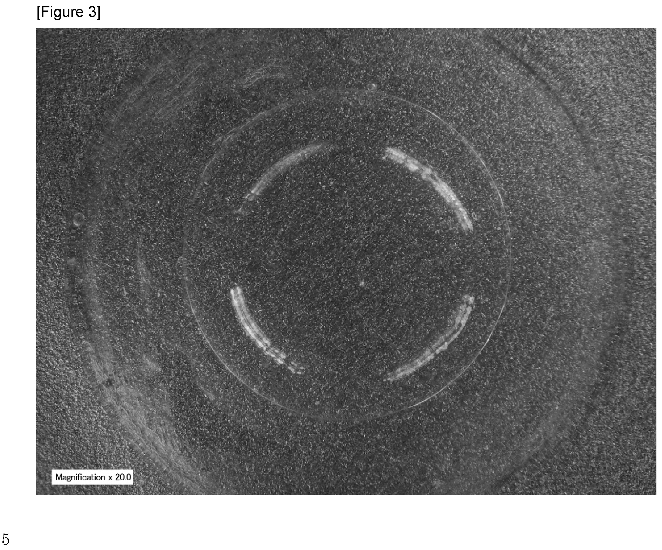

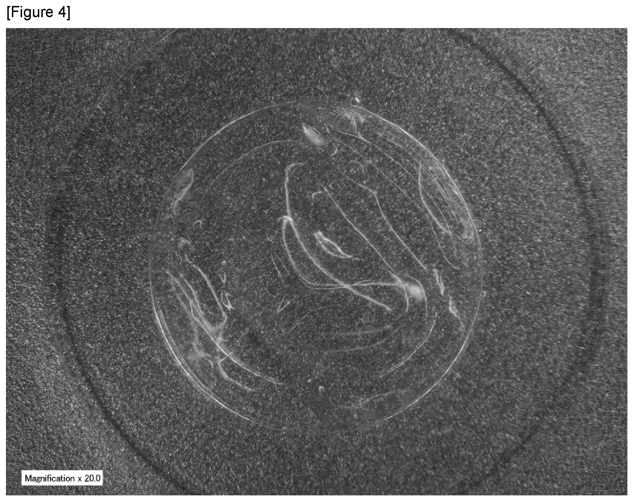

The evaluation results of adhesiveness, contact lens formability and transparency are shown in Table 1. Figure 2 shows a photograph obtained by observing and photographing the cross section of the hybrid contact lens of Example 1, which was cut in the diameter direction, using a digital microscope (at 20x magnification). Figure 3 shows a photograph of the hybrid contact lens of Example 1 observed and photographed from above in the vertical direction using a digital microscope (at 20x magnification), while Figure 4 shows a photograph of the hybrid contact lens of Reference Example 1 observed and photographed from above in the vertical direction using a digital microscope (at 20x magnification).

As shown in Table 1, the hybrid contact lenses of Examples 1 to 8 were excellent in all of adhesiveness, contact lens formability (peripheral shape) and transparency. As shown in Figures 2 and 3, the hybrid contact lens of Example 1 was stable in shape while the contact lens base material had the hydrophobic component 1 embedded therein. In addition, the hybrid contact lenses of Examples 2 to 8 had the hydrophobic component embedded therein and were stable in shape in the same manner as the hybrid contact lens of Example 1. As shown in Figure 4, the hybrid contact lens of Reference Example 1, produced using the hydrophobic component without silane coupling treatment, had an overall wavy shape and was unsuitable for use as a contact lens.

In contrast, as shown in Table 1, the hybrid contact lenses of Comparative Examples 1 and 2 exhibited poor adhesiveness to the contact lens base material because the silane coupling agent used had one end (organic functional group) being an amino or epoxy group. Therefore, the hybrid contact lenses of Comparative Examples 1 and 2 were unsuitable for use as a contact lens.

[Table 1]

| | | Example 1 | Example 2 | Example 3 | Example 4 | Example 5 | Example 6 | Example 7 | Example 8 | Comparative Example 1 | Comparative Example 2 | Reference Example 1 |
|---|---|---|---|---|---|---|---|---|---|---|---|---|
| Forming condition | Hydrophobic component | 1 | 2 | 3 | 4 | 1 | 1 | 1 | 1 | 1 | 1 | 1 |
| | Forming component | 1 | 1 | 1 | 1 | 2 | 3 | 1 | 1 | 1 | 1 | 1 |
| | Functional group on surfact of hydrophobic component | Methacryl group | Methacryl group | Methacryl group | Methacryl group | Methacryl group | Methacryl group | Vinyl group | Methacryl group | Amine group | Epoxy group | |
| Evaluation | Adhesiveness | + | + | + | + | + | + | + | + | - | - | - |
| | Contact lens formability | + | + | + | + | + | + | + | + | | | |
| | Transparency | + | + | + | + | + | + | + | + | | | |

EP 4 769 011 A1

16

[Industrial applicability]

The method according to one embodiment of the present invention can easily produce hybrid contact lenses by omitting complicated steps, and is suitable for producing hybrid contact lenses on an industrial scale. In addition, the hybrid contact lens according to one embodiment of the present invention exhibits high adhesiveness and can stably retain a hydrophobic component embedded therein, so that the hybrid contact lens can be used daily as a hybrid contact lens that provides functions imparted by the hydrophobic component, such as oxygen permeability.

Description of symbols

1: First male mold

2: First female mold

3: Second male mold

4: Second female mold

10: Hybrid contact lens

11: Contact lens base material made of hydrogel

12: Hydrophobic component

101: First contact lens-forming composition

102: Second contact lens-forming composition

111: First layer of contact lens

112: Second layer of contact lens

121: First copolymer

122: Second copolymer

Cross-reference of related applications

The present application claims the benefit of priority to Japanese Patent Application No. 2023-133880, filed on August 21, 2023, the disclosure of which is incorporated herein by reference in its entirety. In addition, the disclosure of all the documents described herein including Patent Documents 1 and 2 is incorporated herein by reference in its entirety.

**Claims**

1.   A method of producing a hybrid contact lens having a hydrophobic component embedded therein, comprising:

subjecting a forming mold fitting a male mold in which a hydrophobic component having a polymerizable functional group on the surface is placed on the top surface of the convex portion into a female mold comprising a first contact lens-forming composition in the concave portion to a first copolymerization reaction to obtain a first copolymer having the hydrophobic component from the surface in contact with the male mold to the inside;
subjecting a forming mold fitting a female mold comprising a second contact lens-forming composition on the first copolymer in the concave portion into a male mold to a second copolymerization reaction to obtain a second copolymer having the hydrophobic component in the inside thereof; and
subjecting the second copolymer to hydration and swelling treatment to obtain a hybrid contact lens having the hydrophobic component embedded therein.

2. A method of producing a hybrid contact lens having a hydrophobic component embedded therein, comprising:

subjecting a forming mold fitting a female mold in which a hydrophobic component having a polymerizable functional group on the surface is placed on the bottom surface of the concave portion and which comprises a first contact lens-forming composition in the concave portion into a male mold to a first copolymerization reaction to obtain a first copolymer having the hydrophobic component from the surface in contact with the female mold to the inside;

subjecting a forming mold fitting a female mold comprising a second contact lens-forming composition in the concave portion into a male mold having the first copolymer on the top surface of the convex portion to a second copolymerization reaction to obtain a second copolymer having the hydrophobic component in the inside thereof; and

subjecting the second copolymer to hydration and swelling treatment to obtain a hybrid contact lens having the hydrophobic component embedded therein.

3. The method of producing a hybrid contact lens according to claim 1 or 2, further comprising: treating the hydrophobic component with a silane coupling agent whose organic functional group is a polymerizable functional group to obtain a hydrophobic component having a polymerizable functional group on the surface.

4. The method of producing a hybrid contact lens according to claim 1 or 2, wherein the hydrophobic component is a hydrophobic component selected from the group consisting of a thermoplastic elastomer, a thermosetting elastomer, a thermosetting polymer, and a thermoplastic polymer.

5. The method of producing a hybrid contact lens according to claim 1 or 2, wherein the hydrophobic component is a hydrophobic component having a through hole.

6. A hybrid contact lens obtained by the method according to claim 1 or 2.

[Figure 1A]

[Figure 1B]

[Figure 2]

Magnification x 20.0

[Figure 3]

Magnification x 20.0

[Figure 4]

Magnification x 20.0

## INTERNATIONAL SEARCH REPORT

| International application No. |
|---|
| **PCT/JP2024/029382** |

| A. | CLASSIFICATION OF SUBJECT MATTER |
|---|---|

*G02C 7/04*(2006.01)i
FI: G02C7/04

According to International Patent Classification (IPC) or to both national classification and IPC

| B. | FIELDS SEARCHED |
|---|---|

Minimum documentation searched (classification system followed by classification symbols)

G02C7/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2018-022139 A (JOHNSON & JOHNSON VISION CARE, INC.) 08 February 2018 (2018-02-08) paragraphs [0018], [0052], [0055]-[0057], [0063], [0081], [0126]-[0130], [0133], [0134], fig. 1, 4 | 1-5 |
| X | | 6 |
| A | JP 2015-111262 A (JOHNSON & JOHNSON VISION CARE, INC.) 18 June 2015 (2015-06-18) paragraphs [0014], [0029], [0090] | 1-5 |
| X | | 6 |
| A | WO 2019/078231 A1 (SEED CO., LTD.) 25 April 2019 (2019-04-25) entire text | 1-6 |
| A | JP 2015-102870 A (JOHNSON & JOHNSON VISION CARE, INC.) 04 June 2015 (2015-06-04) entire text | 1-6 |

☑ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **21 October 2024** | **05 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

International application No.

**PCT/JP2024/029382**

### C. DOCUMENTS CONSIDERED TO BE RELEVANT

| Category* | Citation of document, with indication, where appropriate, of the relevant passages | Relevant to claim No. |
|---|---|---|
| A | JP 2013-544684 A (DAYSOFT LIMITED) 19 December 2013 (2013-12-19)<br>entire text | 1-6 |
| A | US 2022/0326412 A1 (ALCON INC.) 13 October 2022 (2022-10-13)<br>whole document | 1-6 |
| A | WO 2013/175561 A1 (MENICON CO., LTD.) 28 November 2013 (2013-11-28)<br>entire text | 1-6 |
| A | US 2017/0307779 A1 (COOPERVISION INTERNATIONAL HOLDING COMPANY, LP)<br>26 October 2017 (2017-10-26)<br>whole document | 1-6 |

Form PCT/ISA/210 (second sheet) (July 2022)

## INTERNATIONAL SEARCH REPORT
### Information on patent family members

| International application No. |
| --- |
| **PCT/JP2024/029382** |

| Patent document cited in search report | | | Publication date (day/month/year) | Patent family member(s) | | | Publication date (day/month/year) |
| --- | --- | --- | --- | --- | --- | --- | --- |
| JP | 2018-022139 | A | 08 February 2018 | US | 2018/0004012 | A1 | |
| | | | | paragraphs [0018], [0070], [0073]-[0075], [0081], [0099], [0147]-[0149], [0154], [0155], fig. 1, 4 | | | |
| | | | | EP | 3264164 | A1 | |
| | | | | CA | 2971624 | A | |
| | | | | KR | 10-2018-0003441 | A | |
| | | | | AU | 2017203125 | A | |
| | | | | SG | 10201704479R | A | |
| | | | | TW | 201808213 | A | |
| | | | | IL | 252273 | A | |
| | | | | BR | 102017014078 | A | |
| | | | | RU | 2017122157 | A | |
| | | | | HK | 1248827 | A | |
| JP | 2015-111262 | A | 18 June 2015 | US | 2015/0145155 | A1 | |
| | | | | paragraphs [0025], [0041], [0107] | | | |
| | | | | EP | 2875939 | A2 | |
| | | | | IL | 235510 | A | |
| | | | | CA | 2871983 | A | |
| | | | | AU | 2014265100 | A | |
| | | | | KR | 10-2015-0059614 | A | |
| | | | | TW | 201534459 | A | |
| | | | | HK | 1210108 | A | |
| | | | | RU | 2014145839 | A | |
| | | | | BR | 102014029086 | A | |
| | | | | SG | 10201407398Y | A | |
| WO | 2019/078231 | A1 | 25 April 2019 | EP | 3699676 | A1 | |
| | | | | CN | 111328381 | A | |
| | | | | SG | 11202003518V | A | |
| | | | | TW | 201917452 | A | |
| JP | 2015-102870 | A | 04 June 2015 | US | 2015/0146159 | A1 | |
| | | | | EP | 3335865 | A1 | |
| | | | | IL | 235488 | A | |
| | | | | CA | 2871234 | A | |
| | | | | AU | 2014265096 | A | |
| | | | | KR | 10-2015-0059613 | A | |
| | | | | TW | 201522026 | A | |
| | | | | HK | 1210107 | A | |
| | | | | RU | 2014146981 | A | |
| | | | | BR | 102014029074 | A | |
| | | | | SG | 10201407173Y | A | |
| | | | | HK | 1255155 | A | |
| JP | 2013-544684 | A | 19 December 2013 | US | 2014/0035176 | A1 | |
| | | | | GB | 201020106 | D | |
| | | | | WO | 2012/069615 | A1 | |
| | | | | EP | 2643152 | A1 | |
| | | | | CN | 103313843 | A | |
| | | | | HK | 1165759 | A | |
| | | | | ES | 2854901 | T | |

Form PCT/ISA/210 (patent family annex) (July 2022)

## INTERNATIONAL SEARCH REPORT
### Information on patent family members

International application No.

**PCT/JP2024/029382**

| Patent document cited in search report | | | Publication date (day/month/year) | Patent family member(s) | | | Publication date (day/month/year) |
|---|---|---|---|---|---|---|---|
| US | 2022/0326412 | A1 | 13 October 2022 | WO | 2022/208448 | A1 | |
| | | | | EP | 4313569 | A1 | |
| | | | | TW | 202302328 | A | |
| | | | | KR | 10-2023-0144635 | A | |
| WO | 2013/175561 | A1 | 28 November 2013 | (Family: none) | | | |
| US | 2017/0307779 | A1 | 26 October 2017 | GB | 2563182 | A | |
| | | | | WO | 2017/182817 | A1 | |
| | | | | EP | 3446159 | A1 | |
| | | | | TW | 201815969 | A | |
| | | | | CA | 3019627 | A | |
| | | | | AU | 2017252594 | A | |
| | | | | SG | 11201808359X | A | |
| | | | | CN | 108885280 | A | |
| | | | | KR | 10-2018-0133424 | A | |
| | | | | MX | 2018011652 | A | |
| | | | | HK | 1257967 | A | |

Form PCT/ISA/210 (patent family annex) (July 2022)

**EP 4 769 011 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006515689 A
- JP 2019515326 A
- JP 2023133880 A